(19) **Europäisches Patentamt / European Patent Office / Office européen des brevets**

(11) **EP 2 878 577 B1**

(12) # EUROPEAN PATENT SPECIFICATION

(45) Date of publication and mention of the grant of the patent:
**05.04.2017 Bulletin 2017/14**

(21) Application number: **12881822.6**

(22) Date of filing: **26.11.2012**

(51) Int Cl.:
*C01B 35/04* (2006.01)      *C01F 7/54* (2006.01)
*C22C 1/00* (2006.01)      *C25C 3/18* (2006.01)

(86) International application number:
**PCT/CN2012/085288**

(87) International publication number:
**WO 2014/015597 (30.01.2014 Gazette 2014/05)**

(54) **METHOD FOR PRODUCING ZIRCONIUM BORIDE AND FOR SIMULTANEOUSLY PRODUCING CRYOLITE**

VERFAHREN ZUR HERSTELLUNG VON ZIRKONBORID UND ZUR GLEICHZEITIGEN HERSTELLUNG VON KRYOLITH

PROCÉDÉ POUR LA PRODUCTION DE BORURE DE ZIRCONIUM ET POUR LA PRODUCTION SIMULTANÉE DE CRYOLITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2012 CN 201210259228**

(43) Date of publication of application:
**03.06.2015 Bulletin 2015/23**

(73) Proprietor: **Shenzhen Sunxing Light Alloys Materials Co., Ltd**
**Shenzhen, Guangdong 518000 (CN)**

(72) Inventors:
• **CHEN, Xuemin**
  **Shenzhen**
  **Guangdong 518000 (CN)**
• **YANG, Jun**
  **Shenzhen**
  **Guangdong 518000 (CN)**
• **LI, Zhihong**
  **Shenzhen**
  **Guangdong 518000 (CN)**
• **WU, Weiping**
  **Shenzhen**
  **Guangdong 518000 (CN)**

• **WEI, Shiming**
  **Shenzhen**
  **Guangdong 518000 (CN)**

(74) Representative: **Prol European Patent Attorneys**
**Postfach 2123**
**90711 Fürth (DE)**

(56) References cited:
EP-B1- 0 556 367      CN-A- 101 948 978
CN-A- 101 948 978      CN-A- 102 344 149
CN-A- 102 583 422      CN-A- 102 583 422
CN-A- 102 732 914      CN-A- 102 745 703
CN-A- 102 745 704      CN-A- 102 747 253
GB-A- 802 071

• ZHAO ET AL: "Effects of molten temperature on the morphologies of in situ Al3Zr and ZrB2 particles and wear properties of (Al3Zr+ZrB2)/Al composites", MATERIALS SCIENCE AND ENGINEERING A: STRUCTURAL MATERIALS:PROPERTIES, MICROSTRUCTURE & PROCESSING, LAUSANNE, CH, vol. 457, no. 1-2, 31 March 2007 (2007-03-31), pages 156-161, XP022011867, ISSN: 0921-5093, DOI: 10.1016/J.MSEA.2006.12.007

**Description**

**FIELD OF THE INVENTION**

The disclos ure relates to a met hod for prep aring met al borides and more particularly to a method for prep aring zirconium boride and synchronously prep aring a cryolite.

**BACKGROUND OF THE INVENTION**

At present, the aluminum electrolysis industry still employs the conventiona l Hall-Heroult method, electrolyte always takes cryolite-alumina as a basic system, and the currently used electrolytic cell wit h a prebaked anode mainly uses a carbon cathode. As a carbon cathode cannot wet molten aluminum and suf fers from a long-term corrosion from cryolite, to prolong the se rvice life of an electrolytic cell, it is usually needed to coat an inert coating on the surface of the carbon cathode. With an excellent wettability to molten aluminum and a resistance to the corrosion from cryolite, zirconium boride is highly suit able for a co ating on the surface of a carbon cathode. For their expensive price, bor ides of transition met als such as zirconium boride are difficult to be widely applied to the coating on the surf ace of a carbon cathode at present.

Existing industrial zirconium bor ide production methods mainly include the following three types:

1: the direct reaction of the met al zirconium with the simple subst ance boron at a high temperature: $Zr+2B=ZrB_2$;
2: boron carbonization method: zirconium dioxide directly react s with boron carbide in a carbon tube in the presence of C:
$2ZrO_2+B_4C+3C=2ZrB_2+4CO$, the reaction temperature is 1800-1900 degrees centigrade when the atmosphere in the carbon tube is $H_2$ or is reduced to 1650-1750 degrees centigrade when the atmosphere in the carbon tube is a vacuum atmosphere;
3: vapor deposition method: conducting the following reaction by using $ZrCl_4$ and $BCl_3$ as raw materials with the participation of $H_2$:

$ZrCl_4+BCl_3+5H_2=ZrB_2+10HCl$, the deposition temperature is 8000-1000 degrees centigrade, and a product of an abrasive grade and a product of an electronic grade can be obtained.

Expensive simple substance boron, the industrial yield of which is not high (usually lower than 90%) but the production cost of which is high, leads to the expensive price of zirconium boride and consequentially limits the large-scale industrial production of zirconium boride.
CN 102583422 A relates to a method for preparing titanium and a cryolite.

**SUMMARY OF THE INVENTION**

To address the problems existing in the prior art, the inventor has made a lot of research on an electrolyte selection and preparation method, especially on a method for preparing zirconium boride and raw materials for producing zirconium boride, and unexpectedly finds that the problem of the preparation of zirconium boride can be addressed by preparing zirconium boride through the reaction of raw materials of fluorozirconate and fluoborate with aluminum, besides, the use of the low molecular ratio sodium cryolite synchronously prepared by the method as the electrolyte of an aluminum electrolysis system can reduce the industrial electrolysis temperature of aluminum electrolysis to reduce power consumption and overall production cost.

A method for preparing zirconium boride and synchronously preparing a cryolite is provided in accordance with independent claim 1.

Some further improvements to the method are recited in the dependent claims.

Preferably , the fluorozirconate is pot assium fluozirconate, and the fluoborate is potassium fluoborate.

Preferably , the fluorozirconate is s odium fluozirconate, and the fluoborate is sodium fluoborate.

Preferably, the cr yolite obtained in S tep B is a pot assium cryolite the molecular formula of which is $mKF{\cdot}AlF_3$, in which m is 1.2.

Preferably , the cryolite obtained in Step B is a s odium cryolite the molecular formula of which is $nNaF{\cdot}AlF_3$, in which n is 1.2.

The chemical equation involved in the method is as follows:

$$\frac{10}{3}Al + K_2ZrF_6 + 2KBF_4 = ZrB_2 + \frac{10}{3}\left(\frac{6}{5}KF \cdot AlF_3\right)$$

$$\frac{10}{3}Al + Na_2ZrF_6 + 2NaBF_4 = ZrB_2 + \frac{10}{3}\left(\frac{6}{5}NaF \cdot AlF_3\right).$$

The use of the low mole cular ratio sodium cryolites ( $\frac{6}{5}KF \cdot AlF_3$ and $\frac{6}{5}NaF \cdot AlF_3$) prep ared using the technical scheme provided herein in the aluminum electrolysis industry can improve the solubility property of aluminum oxide t o reduce electrolysis temperature, lower power cons umption, increase electrolysis ef ficiency and reduce overall production cost.

Compared with existing technologi es, the disclosure has the following beneficial effects: the new zirconium borid e preparation method provided herein is simple in preparation flow and the device used, short in preparation period and high in reaction efficiency, the prep ared zirconium boride with many cont act angle s has a large specific surface area and cont ains a controllable amount of aluminum, besides, the use of the synchronously pr epared low mo lecular ratio cryolite in the aluminum electrolysis industry can achieve a proper electrical conductivity and improve the solubility of aluminum oxide and consequent ially reduce electrolysis temperature, lower power consumption, increase elec trolysis ef ficiency and reduce overall preparation cost; and the method provided herein for prep aring an ordinary low molecular ratio cryolite is mild in reaction condition, easy to control, simple in technical flow, complete in reaction and high in the quality of the product obtained.

## DETAILED DESCRIPTION OF THE PREFERRED EMBODIMENTS

The disclos ure is de scribed below in det ail with reference to specific embodiments.

Embodiment 1

One ton of aluminum is weighted and placed in a reactor, the reactor is vacuumized and fed with argon for pr otection and then heated to 750 degrees centigrade, a mixture consisting of dry pot assium fluoborate and dry pot assium fluozirconate in a reaction ratio is slowly added into the reactor, wherein the molar ratio of pot assium fluoborate to pot assium fluozir conate is 2:1, the react ants are rapidly stirred for 5 hours to generate zirconi um boride and a pot assium cryolite $\frac{6}{5}KF \cdot AlF_3$, then the cover of the reactor is opened, the upper molten liquid pot assium cryolite is pumped out using a siphon pump.

When an electrolyte consisting of the potassium cryolite ($\frac{6}{5}KF \cdot AlF_3$) provided herein and aluminium oxide is used in an al uminum electrolysis industry, the working range of an electrolysis temperature c an be controlled betwe en 900-960 degrees centigrade.

Embodiment 2

One ton of aluminum is weighted and placed in a reactor, the reactor is vacuumized and fed with argon for pr otection and then heated to 750 degrees centigrade, a mixture consisting of dry sodium fluoborate and dry sodium fluozirconate in a reaction ratio is slowly added into the reactor, wherein the molar ratio of sodium fluoborate to sodium fluozirconate is 2:1, the reactants are rapidly stirred for 5 hours to generate zirconium boride and a sodium cryolite $\frac{6}{5}NaF \cdot AlF_3$, then the cover of the reactor is opened, the upper molten liquid sodium cryolite is pumped out using a siphon pump.

When an electrolyte consis ting of the sodium cryolite ( $\frac{6}{5}NaF \cdot AlF_3$) provided herein and aluminum oxide is used in an aluminum electr olysis industry, the working range of an electrolysis temperature c an be controlled betwe en 900-960 degrees centigrade.

## Claims

1. A method for preparing zirconium boride and synchronously preparing a cryolite, comprising: the following steps:

Step A: placing aluminum in a reactor, vacuuming the reactor and then feeding argon gas into the reactor, heating the reactor to 750 degrees centigrade, and adding a mixture consisting of dry fluorozirconate and dry fluoborate; and

Step B: stirring the reactants for 4-6 hours and extracting the upper molten liquid with a siphon pump to obtain a cryolite, wherein the lower substance is zirconium boride;

wherein the molar ratio of the fluorozirconate to the fluoborate is 1:2.

2. The method according to claim 1, wherein the fluorozirconate is potassium fluozirconate, and the fluoborate is potassium fluoborate.

3. The method according to claim 1, wherein the fluorozirconate is sodium fluozirconate, and the fluoborate is sodium fluoborate.

4. The method according to claim 2, wherein the cryolite obtained in Step B is a potassium cryolite the molecular formula of which is $mKF \cdot AlF_3$, in which m is 1.2.

5. The method according to claim 3, wherein the cryolite obtained in Step B is a sodium cryolite the molecular formula of which is $nNaF \cdot AlF_3$, in which n is 1.2.


## Patentansprüche

1. Verfahren zur Herstellung von Zirkoniumborid und gleichzeitig eines Kryoliths, umfassend die Verfahrensschritte:

Schritt A: Plazieren von Aluminium in einen Reaktor, Vakuumisieren des Reaktors und in Folge Befüllen des Reaktors mit Argongas, Erhitzen des Reaktors auf 750 Grad Celsius und Hinzugabe einer Mischung aus Fluorzirkonat und Fluorborat; und

Schritt B: Rühren der Reaktionsmittel für 4-6 Stunden Rühren und Extrahieren der oberen geschmolzenen Flüssigkeit mit einer Hebepumpte, um ein Kryolith zu erhalten, wobei die untere Substanz Zirkonborid ist;

das Molverhältnis des Fluorzirkonats zum Fluoborat 1:2 ist.

2. Verfahren nach Anspruch 1, wobei Fluorzirkonat Kaliumfluozirkonat und Fluorborat Kaliumfluorborat sind.

3. Verfahren nach ording Anspruch 1, wobei Fluorzirkonat Natriumfluozirkonat und Fluorborat Natriumfluorborat sind.

4. Verfahren nach Anspruch 2, wobei der in Schritt B erhaltene Kryolith ein Kaliumkryolith ist, dessen Molekülformel $mKF \cdot AlF_3$ ist, wobei m den Wert 1,2 hat.

5. Verfahren nach Anspruch 3, wobei der in Schritt B erhaltene Kryolith ein Natriumkryolith ist, dessen Molekülformel $nNaF \cdot AlF_3$ ist, wobei m den Wert 1,2 hat.


## Revendications

1. Un procédé destiné à la préparation de borure de zirconium et à la préparation simultanée de cryolite comprenant les étapes suivantes :

Étape A : introduction d'aluminium dans un réacteur, mise sous vide du réacteur et ensuite alimentation d'argon dans le réacteur, chauffage du réacteur à une température de 750°C et ajout d'un mélange composé de fluorozirconate sec et de fluoborate sec ; et

Étape B : agitation pendant 4 à 6 heures et extraction du liquide fondu à la partie supérieure avec une pompe à siphon pour obtenir une cryolite, dans laquelle la substance est du borure de zirconium ;

dans laquelle le rapport molaire du fluorozirconate au fluoborate est de 1:2.

2. Le procédé selon la revendication 1, dans lequel le fluorozirconate est du fluozirconate de potassium et le fluoborate est du fluoborate de potassium.

3. Le procédé selon la revendication 1, dans lequel le fluorozirconate est du fluozirconate de sodium et le fluoborate est du fluoborate de sodium.

4. Le procédé selon la revendication 2, dans lequel la cryolite obtenue à l'étape B est une cryolite de potassium dont la formule moléculaire est mKF AlF$_3$, dans laquelle m est 1.2.

5. Le procédé selon la revendication 3, dans lequel la cryolite obtenue à l'étape B est une cryolite de sodium dont la formule moléculaire est nNaF·AlF$_3$, dans laquelle n est 1.2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102583422 A